# EUROPÄISCHE PATENTSCHRIFT

(11) **EP 3 484 645 B1**
(45) Veröffentlichungstag und Bekanntmachung des Hinweises auf die Patenterteilung: **26.05.2021**
(21) Anmeldenummer: 17737824.7
(22) Anmeldetag: 12.07.2017
(51) Int. Cl.: B27G 15/00

(54) **STUFENBOHRER**
STEP DRILL
FORÊT ETAGE

(30) Priorität: 14.07.2016 DE 102016212910; 03.08.2016 DE 102016214386
(43) Veröffentlichungstag der Anmeldung: 22.05.2019
(73) Patentinhaber: MAPAL Fabrik für Präzisionswerkzeuge Dr. Kress KG, 73431 Aalen (DE)
(72) Erfinder: KRENZER, Ulrich, 87787 Wolfertschwenden (DE); TOPAL, Serkan, 89281 Altenstadt (DE)
(74) Vertreter: Kordel, Mattias
(86) Internationale Anmeldenummer: PCT/EP2017/067635
(87) Internationale Veröffentlichungsnummer: WO 2018/011314

(56) Entgegenhaltungen:
- EP-A2- 1 512 476
- WO-A1-01/10587
- WO-A1-2014/191216
- JP-A- S61 100 307
- US-A- 1 747 117

## Beschreibung

Die Erfindung betrifft einen Stufenbohrer gemäß Oberbegriff des Anspruchs 1.

Stufenbohrer der hier angesprochenen Art sind bekannt (WO 2014/191216 A1; JP S61 100307 A; US 1 747 117 A; WO 01/10587 A1). Sie weisen unter anderem eine Bohrerspitze mit einer Anzahl geometrisch definierter Schneiden auf sowie mindestens eine einen größeren Außendurchmesser als die Bohrerspitze aufweisende Aufbohrstufe, die ebenfalls eine Anzahl von Schneiden umfasst. Den Schneiden sowohl der Bohrerspitze als auch der Aufbohrstufe sind Spannuten zugeordnet, welche dazu dienen, die von den Schneiden der Bohrerspitze beziehungsweise den Schneiden der Aufbohrstufe abgetragenen Späne, die bei Verwendung des Stufenbohrers, nämlich bei der Bearbeitung eines Werkstücks auftreten, abführen. Eine sichere und reibungsarme Abfuhr der Späne ist Voraussetzung für eine sichere Funktion des Stufenbohrers. Gerade bei Stufenbohrern der hier angesprochenen Art kann sich die Spankontrolle und -abfuhr als sehr schwierig erweisen, da sich die Spanwinkel der einzelnen Stufen unterscheiden. Außerdem weichen die Schnittgeschwindigkeiten der Schneiden der Bohrerspitze und der mindestens einen Aufbohrstufe teilweise stark voneinander ab. Daher ist es oft sehr schwierig, die Schnittbedingungen, also die Schnittgeschwindigkeit und den Vorschub so zu wählen, dass sich für alle Schneiden eine für eine sichere Spanabfuhr erforderliche Spanbildung ergibt.

Stufenbohrer werden in verschiedenen Ausführungsformen realisiert:
Der einfache Stufenbohrer hat genauso viele Spannuten wie Schneiden an der Bohrerspitze, also in der Regel zwei. Diese Ausführung ist in der Fertigung relativ kostengünstig und bietet eine gute Stabilität des Werkzeugs. Bei der Bearbeitung eines Werkstücks werden sowohl die von der Bohrerspitze abgetragenen Späne, als auch die von der Aufbohrstufe abgetragenen Späne in denselben Spannuten abgeführt. Die von der Aufbohrstufe abgetragenen Späne gelangen also zu den von der Bohrerspitze abgetragenen Spänen und vermischen sich mit diesen in den Spannuten. Beim Bohren von duktilen, langspanenden Werkstückmaterialien kommt es also an den Aufbohrstufen zur Kollision der von der Bohrerspitze abgetragenen Späne mit den von der Aufbohrspitze abgetragenen Spänen. Häufig wird dadurch die Späneabfuhr aus der Bohrerspitze blockiert, sodass diese sogar brechen kann.

Der sogenannte Mehrfasen-Stufenbohrer, also ein Stufenbohrer, bei dem sowohl die Schneiden der Bohrerspitze als auch die Schneiden der Aufbohrstufe eigene Spannuten aufweisen, bietet hier eine deutliche Verbesserung, da aufgrund der zusätzlichen Spannuten für die Aufbohrschneiden eine Span-Kollision der oben angesprochenen Art vermieden wird. Die Späne der Bohrerspitze und der Aufbohrschneiden fließen hier in getrennten Spannuten und können sich nicht gegenseitig blockieren. Ein großer Nachteil der Geometrie derartiger Mehrfasen-Stufenbohrer ist jedoch die erhebliche Schwächung des Bohrers durch die zusätzlichen Spannuten. Derartige Bohrer haben gegenüber den einfachen Stufenbohrern der oben genannten Art eine deutlich geringere Stabilität. Ein weiterer Nachteil des Mehrfasen-Stufenbohrers ist auch die schwierige Späneabfuhr der Aufbohrschneiden aus großer Tiefe, also bei großen Bohrtiefen. Die relativ kleinen Zusatzspannuten, also die Spannuten der Aufbohrschneiden, können hier ein echtes Problem darstellen.

Aufgabe der Erfindung ist es daher, einen Stufenbohrer zu schaffen, der diesen Nachteil vermeidet.

Zur Lösung dieser Aufgabe wird ein Stufenbohrer vorgeschlagen, der die in Anspruch 1 aufgeführten Merkmale aufweist. Er ist mit einem distalen und einem proximalen Ende versehen, außerdem mit einer Bohrerspitze, die an dem distalen Ende eine Spitze eine Anzahl geometrisch definierter Schneiden aufweist. Mit geometrisch definierten Schneiden sind hier Schneiden angesprochen, die dadurch entstehen, dass zwei aneinandergrenzende Flächen gebildet werden, beispielsweise durch einen Schleifvorgang, deren Schnittlinie die Schneide bildet. Derartige Schneiden unterscheiden sich also von solchen, die beispielsweise bei Schleifwerkzeugen vorgesehen sind, welche einzelne Schleifkörper umfassen, die als Schneiden dienen. Den Schneiden der Bohrerspitze sind auch als Hauptnut bezeichnete Spannuten zugewiesen, über welche von den Schneiden abgetragene Späne abgeführt werden. Die Schneiden werden durch Schneidecken begrenzt, welche auf einer gedachten ersten Kreislinie um eine Mittelachse des Stufenbohrers liegen, die auch als erster Flugkreis bezeichnet wird. Diese weist einen ersten Radius auf. Der Bohrer umfasst außerdem mindestens eine, in einem Abstand zu dem distalen Ende des Stufenbohrers angeordnete Aufbohrstufe, die eine in Richtung auf das distale Ende weisende Stirnseite mit einer Anzahl von geometrisch definierten Schneiden aufweist, denen wiederum eine Spannut zugewiesen ist. Es liegt hier also ein Mehrfasen-Stufenbohrer vor. Die Spannuten der Aufbohrschneide werden auch als Zusatznuten bezeichnet. Die Schneidecken der Aufbohrstufe liegen auf einer gedachten zweiten Kreislinie um die Mittelachse des Stufenbohrers mit einem zweiten Radius, wobei der erste Radius kleiner ist als der zweite Radius, um den Stufenbohrer zu realisieren. Die zweite Kreislinie wird auch als zweiter Flugkreis bezeichnet. Der erste Flugkreis weist einen ersten Durchmesser auf, und der zweite Flugkreis weist einen zweiten Durchmesser auf, wobei die Durchmesser in üblicher Weise jeweils das Zweifache des entsprechenden Radius betragen, und wobei der zweite Durchmesser größer ist als der erste Durchmesser.

Der Stufenbohrer zeichnet sich dadurch aus, dass die Spannuten der Bohrspitze und die Spannuten der Aufbohrstufe in einem Bereich zusammenlaufen und eine einzige gemeinsame Spannut bilden, der in einem größeren Abstand zu dem distalen Ende des Stufenbohrers angeordnet ist, als die Stirnseite der Aufbohrstufe.

Durch diese Ausgestaltung ist es möglich, dass bei der Bearbeitung eines Werkstücks auftretende Späne, die von den Schneiden der Bohrspitze abgetragen werden, und Späne, die von der Aufbohrstufe abgetragen werden, zunächst getrennt von dem Bereich abgeführt werden, in dem der Stufenbohrer mit dem Werkstück in Eingriff tritt. In dem Bereich der Zusatznuten werden die abgetragenen Späne geformt und aus dem Bearbeitungsbereich der Aufbohrstufe abgeführt. Erst nachdem sich ein mehr oder weniger geordneter Spänestrom in den Zusatznuten gebildet hat, werden diese Späne mit denen der Bohrerspitze, welche durch die Hauptnut abgeführt werden, miteinander vereint. Die im Bereich der Aufbohrstufe abgetragenen Späne gelangen also nicht unmittelbar nach dem Abtragen von einem Werkstück zu dem in der Hauptnut verlaufenden Spänestrom. Eine Vereinigung der in den Haupt- und Zusatznuten abgeführten Späne findet erst in einem Abstand zur Stirnseite der Aufbohrstufe statt, also in einem größeren Abstand zu dem distalen Ende als dem Abstand der Stirnseite der Aufbohrstufe zu dem distalen Ende des Stufenbohrers. Da die Späne der Bohrerspitze und der Aufbohrstufe zunächst in getrennten Bahnen fließen, können sie sich nicht gegenseitig blockieren. Da die Spannuten der Bohrerspitze und der Aufbohrstufe zusammengeführt werden und eine einzige gemeinsame Spannut bilden, wird der Stufenbohrer weniger geschwächt, als wenn über dessen gesamte Länge zwei getrennte Haupt- und Zusatznuten ausgeführt würden.

Der hier vorgeschlagene Stufenbohrer weist also eine deutlich höhere Stabilität als ein herkömmlicher Mehrfasen-Stufenbohrer auf. Da in einem größeren Abstand von dem distalen Ende des Stufenbohrers beide Nuten zu einer einzigen Spannut zusammengeführt werden, ist überdies die Späneabfuhr bei der Herstellung größerer Bohrtiefen mittels des hier angesprochenen Stufenbohrers sicher gewährleistet.

Bei einem bevorzugten Ausführungsbeispiel des Stufenbohrers ist vorgesehen, dass die Drall-Steigung der der Aufbohrstufe zugeordneten Spannuten größer ist als die Drall-Steigung der der Bohrerspitze zugeordneten Spannuten. Diese Ausgestaltung des Stufenbohrers führt auf einfache Weise dazu, dass die Spannuten der Bohrerspitze und der Aufbohrstufe zusammenlaufen. Dadurch, dass die Spannuten, welche die von der Bohrerspitze abgetragenen Späne und die Spannuten, welche den von der Aufbohrstufe abgetragenen Spänen zugeordnet sind, zusammenlaufen, ergibt sich eine reduzierte Schwächung des Stufenbohrers, ohne dass Nachteile bezüglich der Spanabfuhr zu befürchten sind. Vielmehr wird dadurch auch erreicht, dass Späne aus tiefen Bohrungen durch die zusammengeführten Spannuten optimal abführbar sind.

Erfindungsgemäß verjüngt sich der Kern der der Aufbohrstufe zugeordneten Spannuten, wobei der Kerndurchmesser ausgehend von der Stirnseite der Aufbohrstufe in Richtung auf das proximale Ende des Stufenbohrers kleiner wird. Diese Ausgestaltung führt dazu, dass die von dem Stufenbohrer abgetragenen Späne einen größeren Freiraum haben, um effektiv abgeführt werden zu können.

Bei einem weiteren bevorzugten Ausführungsbeispiel ist vorgesehen, dass sich der Kern der der Bohrerspitze zugeordneten Spannuten vergrößert. Damit erhöht sich auch die Stabilität des Stufenbohrers.

Besonders bevorzugt wird ein Ausführungsbeispiel des Stufenbohrers, welches sich dadurch auszeichnet, dass sich der Kern der der Bohrerspitze zugeordneten Spannuten in einem Bereich vergrößert, der in einem größeren Abstand zum distalen Ende des Stufenbohrers angeordnet ist, als die Stirnseite der Aufbohrstufe. Die Vergrößerung dieses Kerns findet also in einem Bereich statt, in dem sich der Durchmesser des den Spannuten der Aufbohrstufe zugeordneten Kerns verjüngt. Einerseits wird dadurch der Raum vergrößert, in welchem Späne sowohl der Bohrerspitze als auch der Aufbohrstufe abgeführt werden können, andererseits wird die Stabilität des Stufenbohrers erhöht. Die Vergrößerung des den Spannuten der Bohrerspitze zugeordneten Kerns und/oder die Verjüngung des den Spannuten der Aufbohrstufe zugeordneten Kerns erfolgt vorzugsweise stetig, sodass Belastungsspitzen des Stufenbohrers bei der Bearbeitung eines Werkstücks vermieden werden.

Weiterhin wird ein Ausführungsbeispiel des Stufenbohrers bevorzugt, welches sich dadurch auszeichnet, dass an dem dem distalen Ende abgewandten Ende der Spannuten sich der Kerndurchmesser der der Bohrerspitze zugeordneten Spannuten dem Kerndurchmesser der der Aufbohrstufe zugeordneten Spannuten annähert, vorzugsweise diesem entspricht. Mit anderen Worten: In einem sich in proximaler Richtung an die Stirnseite der Aufbohrstufe anschließenden Bereich ist der den Spannuten der Aufbohrstufe zugeordnete Kern mit einem Durchmesser versehen, der größer, vorzugsweise wesentlich größer ist als der Durchmesser des den Spannuten der Bohrerspitze zugeordnete Kern. Bei den erfindungsgemäßen Stufenbohrern ist vorgesehen, dass der Kerndurchmesser der der Bohrerspitze zugeordneten Spannuten kleiner ist als im Bereich der der Aufbohrstufe zugeordneten Spannuten. Dabei werden die Kerndurchmesser auch in Abhängigkeit von dem Unterschied zwischen dem Außendurchmesser des Stufenbohrers im Bereich der Bohrerspitze, insbesondere dem ersten Durchmesser des ersten Flugkreises, und im Bereich der Aufbohrstufe, insbesondere dem zweiten Durchmesser des zweiten Flugkreises, gewählt: Ist der Unterschied der Außendurchmesser klein, so ist der Kerndurchmesser der Aufbohrstufe um den Faktor > 1,0 bis 1,5 größer als der Kerndurchmesser der Bohrerspitze. Bei größeren Unterschieden der Außendurchmesser ist der Faktor 2,0 bis 2,5. Bei sehr großen Unterschieden der Außendurchmesser kann der den Spannuten zugeordnete Kern einen Durchmesser aufweisen, der dreimal größer ist als der Durchmesser der den Spannuten der Bohrerspitze zugeordneten Spannuten.

Mit zunehmendem Abstand von der Stirnseite der Aufbohrstufe verringert sich der Kerndurchmesser der Aufbohrstufe, während der Kerndurchmesser des Kerns der Bohrerspitze immer größer wird. Schließlich sind die Kerndurchmesser der beiden Kerne gleich groß, sodass die Spannuten der Bohrerspitze und die Spannuten der Aufbohrstufe vollständig ineinander übergehen.

Es wird auch ein Ausführungsbeispiel des Stufenbohrers bevorzugt, welches sich dadurch auszeichnet, dass zwischen den der Aufbohrstufe zugeordneten Spannuten Stollen ausgebildet werden, deren Breite - ausgehend von der Stirnseite der Aufbohrstufe in Richtung auf das proximale Ende des Stufenbohrers - zunimmt. Durch diese Ausgestaltung wird erreicht, dass die Stabilität des Stufenbohrers ausgehend von der Stirnseite der Aufbohrstufe sich in Richtung auf das proximale Ende vergrößert.

Gemäß einer Weiterbildung der Erfindung ist vorgesehen, dass die Hauptnuten und die Zusatznuten in einem entlang der Mittel- oder Längsachse des Stufenbohrers gemessenen Abstand von dem zweiten Flugkreis zusammenlaufen, der von mindestens dem 1,5-fachen des zweiten Durchmessers des zweiten Flugkreises bis höchstens einem 5-fachen des zweiten Durchmessers beträgt. Bevorzugt beträgt der Abstand von mindestens dem Doppelten des zweiten Durchmessers bis höchstens dem 4-fachen des zweiten Durchmessers, bevorzugt beträgt er das Dreifache des zweiten Durchmessers.

Insgesamt zeigt sich, dass die Stabilität des hier geschaffenen Stufenbohrers sowohl durch das Zusammenführen der der Bohrerspitze und der Aufbohrstufe zugeordneten Spannuten als auch durch die spezielle Ausgestaltung der Stollen ausgehend von der Stirnseite der Aufbohrstufe in Richtung auf das proximale Ende des Stufenbohrers zunimmt.

Die Erfindung wird im Folgenden anhand der Zeichnung näher erläutert. Es zeigen:
- Figur 1: eine Seitenansicht des Stufenbohrers;
- Figur 2: eine Seitenansicht des in Figur 1 dargestellten Stufenbohrers, der gegenüber Figur 1 um 90° um seine Längsachse gedreht wurde;
- Figur 3: einen ersten Querschnitt senkrecht zur Längsachse des Stufenbohrers nahe der Stirnseite der Aufbohrstufe;
- Figur 4: einen zweiten Querschnitt des Stufenbohrers in einem größeren Abstand zur Stirnseite der Aufbohrstufe als in Figur 3;
- Figur 5: einen weiteren Querschnitt des Stufenbohrers in einem größeren Abstand zur Stirnseite der Aufbohrstufe als in Figur 4 und
- Figur 6: eine vergrößerte Seitenansicht des vorderen Teils des Stufenbohrers gemäß Figur 2.

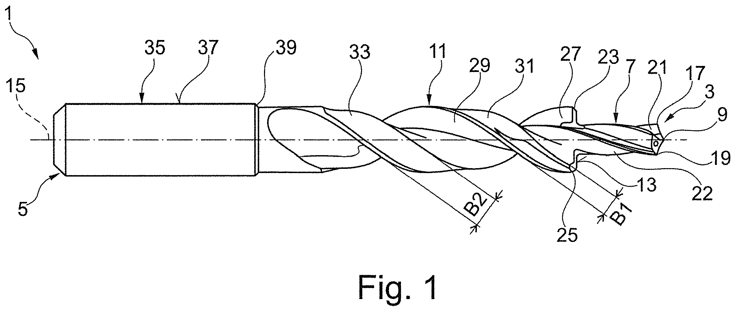

Figur 1 zeigt einen Stufenbohrer 1 mit einem distalen Ende 3 sowie einem gegenüberliegenden proximalen Ende 5, außerdem mit einer Bohrerspitze 7, die an dem distalen Ende 3 eine Spitze 9 aufweist, sowie mit einer in einem Abstand zum distalen Ende 7 angeordneten Aufbohrstufe 11, die eine dem distalen Ende 3 zugewandte Stirnseite 13 umfasst.

An der Spitze 9 der Bohrerspitze 7 ist eine Anzahl von geometrisch definierten Schneiden vorgesehen. Bei dem hier dargestellten Ausführungsbeispiel ist in Figur 1 oberhalb einer Längsachse 15 des Stufenbohrers 1 eine erste Schneide 17 zu erkennen, außerdem eine gegenüberliegende zweite Schneide 19. Jeder der Schneiden ist eine Spannut zugeordnet. In Figur 1 ist die der ersten Schneide 17 zugeordnete Spannut 21 zu erkennen, die dazu dient, von der ersten Schneide 17 abgetragene Späne abzuführen. Die Figur zeigt auch die der zweiten Schneide zugeordnete Spannut 22.

Im Bereich der Stirnseite 13 der Aufbohrstufe 11 ist ebenfalls eine Anzahl von Schneiden vorgesehen, wobei das hier dargestellte Ausführungsbeispiel eine oberhalb der Längsachse 15 liegende erste Schneide 23 sowie eine gegenüberliegende zweite Schneide 25 aufweist. Den beiden Schneiden 23 und 25 sind eigene Spannuten zugeordnet, die nicht mit den der ersten und zweiten Schneide 17, 19 der Bohrerspitze 7 zugeordneten Spannuten zusammenfallen, also getrennt von diesen ausgebildet sind. Figur 1 zeigt die der ersten Schneide 23 zugeordnete Spannut 27 sowie die der zweiten Schneide 25 zugeordnete Spannut 29.

Die erste und zweite Schneide 17 und 19 der Bohrerspitze 7 sind auf einer hier nicht dargestellten gedachten ersten Kreislinie mit einem ersten Radius angeordnet, welche im Wesentlichen in einer Ebene liegt, auf welcher die Längsachse 15 des Stufenbohrers 1 senkrecht steht. Entsprechend sind die erste und zweite Schneide 23 und 25der Aufbohrstufe 11 auf einer gedachten, hier nicht dargestellten zweiten Kreislinie mit einem zweiten Radius angeordnet, welche im Wesentlichen in einer Ebene liegt, auf der die Längsachse 15 senkrecht steht. Es wird hier lediglich beispielhaft davon ausgegangen, dass die beiden gedachten Kreislinien jeweils im Wesentlichen in einer Ebene liegen, auf welcher die Längsachse 15 des Stufenbohrers 1 senkrecht steht. Dies ist dann anzunehmen, wenn die beiden Schneiden 17 und 19 der Bohrerspitze 7 und 23 und 25 der Aufbohrstufe 11 - in Richtung der Längsachse 15 des Stufenbohrers 1 gesehen - auf gleicher Höhe liegen. Grundsätzlich ist es auch möglich, die beiden Schneiden der Bohrerspitze 7 beziehungsweise Aufbohrstufe 11 axial zu versetzen.

Der erste Radius der ersten Kreislinie ist kleiner als der zweite Radius der zweiten Kreislinie, sodass der erste Durchmesser des ersten Flugkreises der Bohrerspitze 7 kleiner ist als der zweite Durchmesser des zweiten Flugkreises der Aufbohrstufe 11. Auf diese Weise wird der hier dargestellte Stufenbohrer 1 realisiert.

Der Stufenbohrer 1 ist als sogenannter Mehrfasen-Stufenbohrer ausgebildet, weil den Schneiden 17 und 19 der Bohrerspitze 7 und den Schneiden 23 und 25der Aufbohrstufe 11 jeweils eigene Spannuten zugeordnet sind. Bei einem hier dargestellten Ausführungsbeispiel eines Stufenbohrers 1, welcher außer der Bohrerspitze 7 nur eine Aufbohrstufe 11 aufweist, sind also insgesamt vier Spannuten vorgesehen.

Es ist sehr wohl möglich, dass in einem Abstand zur Stirnseite 13 der hier dargestellten Aufbohrstufe 11, in Richtung auf das proximale Ende 5 gesehen, eine weitere Aufbohrstufe vorgesehen ist.

Figur 1 zeigt, dass zwischen der der ersten Schneide 23 der Aufbohrstufe 11 zugeordneten Spannut 27 und der der zweiten Schneide 25 der Aufbohrstufe 11 zugeordneten Spannut 29 ein erster Stollen 31 ausgebildet wird. Entsprechend wird zwischen der Spannut 29 und der Spannut 27 ein zweiter Stollen ausgebildet.

Diese hier beschriebene Ausgestaltung des Stufenbohrers 1 mit zwei Stollen 31 und 33 ergibt sich dadurch, dass die Aufbohrstufe 11 zwei Schneiden aufweist. Werden drei Schneiden vorgesehen, ergeben sich entsprechend auch drei Stollen. Diese Zusammenhänge sind allgemein bekannt, sodass hier nicht näher darauf eingegangen wird.

Die beiden Stollen 31 und 33 weisen in einem Bereich nahe der Stirnseite 13 der Aufbohrstufe 11 eine erste Breite B1 auf. Diese vergrößert sich im weiteren Verlauf des Stollens in Richtung auf das proximale Ende 5 des Stufenbohrers 1 und weist in einem Abstand zur Stirnseite 13 eine zweite Breite B2 auf. Die Stollenbreite nimmt vorzugsweise stetig zu, um Kraftspitzen bei Einsatz des Stufenbohrers 1 zu vermeiden.

Das in Figur 1 dargestellte Ausführungsbeispiel des Stufenbohrers 1 weist also an seinem rechten distalen Ende 3 die Spitze 9 der Bohrerspitze 7 auf. Im Bereich des gegenüberliegenden proximalen Endes 5 ist der Stufenbohrer 1 mit einem Bereich ausgestaltet, der dazu dient, den Stufenbohrer 1 mit einer Antriebseinrichtung, beispielsweise mit der Spindel einer Bohrmaschine zu koppeln. Hier ist der Bereich mit einem beispielsweise zylindrischen Schaft 35 ausgebildet. Die Umfangsfläche 37 des Schafts 35 kann mit einer hier nicht dargestellten Abflachung versehen werden, in deren Bereich eine Befestigungsschraube eingreifen kann, um den Schaft 35 in der Spindel einer Bohrmaschine drehfest und in einer gegebenen Drehposition festzuspannen. Die Ausgestaltung der Befestigungsbereiche von Bohrern, auch von Stufenbohrern, ist bekannt, sodass hier nicht näher darauf eingegangen wird.

Die Umfangsfläche 37 des Schafts 35 geht über eine hier als Fase ausgebildete Stufe 39 in die Aufbohrstufe 11 über. Diese Stufe ist beispielhaft bei dem hier dargestellten Ausführungsbeispiel vorgesehen. Sie kann allerdings ohne weiteres entfallen.

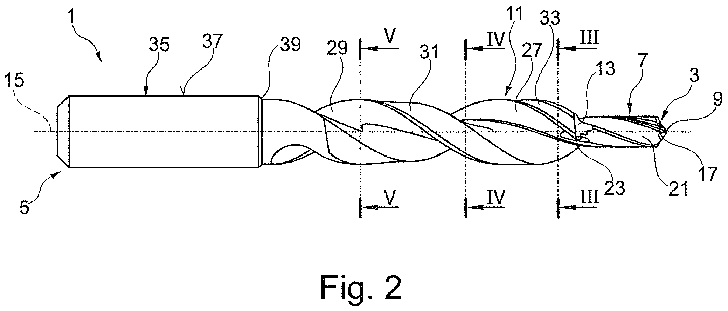

Figur 2 zeigt den in Figur 1 dargestellten Stufenbohrer 1 in Seitenansicht. Allerdings ist der Stufenbohrer hier in Figur 2 gegenüber der Darstellung in Figur 1 um 90° gedreht, sodass beispielsweise die erste Schneide 23 der Aufbohrstufe 11 dem Betrachter von Figur 2 zugewandt ist. Gleiche und funktionsgleiche Elemente sind mit gleichen Bezugszeichen versehen, sodass insofern auf die vorangegangene Beschreibung verwiesen wird. Aus Figur 2 ist ersichtlich, dass die Bohrerspitze 7 eine Spitze 9 aufweist, die eine erste Schneide 17 umfasst, die hier ebenfalls dem Betrachter von Figur 2 zugewandt ist. Deutlich erkennbar ist die der ersten Schneide 17 der Bohrerspitze 7 zugeordnete erste Schneide 17, die ebenfalls dem Betrachter zugewandt ist. Die zugehörige Spannut 21 verläuft von der an dem distalen Ende des Stufenbohrers 1 vorgesehenen Spitze 9 nach links in Richtung auf das proximale Ende des Stufenbohrers 1. Entsprechend läuft die der ersten Schneide 23 der Aufbohrstufe 11 zugeordnete Spannut 27, die von der Stirnseite 13 der Aufbohrstufe 11 ebenfalls nach links in Richtung auf das proximale Ende 5 verläuft.

In Figur 2 sind die Stollen 33 und 31 zu erkennen, die anhand von Figur 1 erläutert wurden.

In Figur 2 sind drei senkrechte gestrichelte Linien mit den Ziffern III, IV und V eingezeichnet, welche Schnittebenen kennzeichnen, auf welchen die Längsachse 15 des Stufenbohrers 1 senkrecht steht.

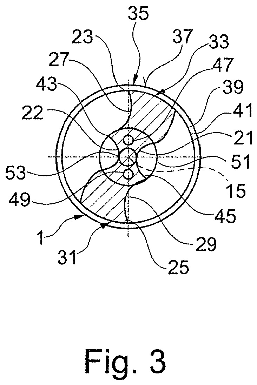

Figur 3 zeigt einen Querschnitt durch den Stufenbohrer 1, der entlang der Linie III-III in Figur 2 verläuft. Die äußere Kreislinie in Figur 3 zeigt die Umfangsfläche 37 des Schafts 35, die innere Kreislinie 41 zeigt den Übergang der Aufbohrstufe 11 zu der Stufe 39, die zu der Umfangsfläche 37 führt. Im Übrigen sind gleiche Teile mit gleichen Bezugszeichen versehen, sodass auf die vorangegangene Beschreibung verwiesen wird.

In der Schnittdarstellung gemäß Figur 3 liegt oben die erste Schneide 23 der Aufbohrstufe 11 und unten deren zweite Schneide 25. Deutlich erkennbar sind hier außerdem die der ersten Schneide 23 zugeordnete Spannut 27 sowie die der zweiten Schneide 25 zugeordnete Spannut 29. Deutlich zu erkennen sind auch die der ersten Schneide 17 der Bohrerspitze 7 zugeordnete Spannut 21 sowie die der zweiten Schneide 19 der Bohrerspitze 7 zugeordnete Spannut 22.

Aus Figur 3 ist deutlich erkennbar, dass die der Bohrerspitze 7 und der Aufbohrstufe 11 zugeordneten Spannuten 21 und 22 beziehungsweise 27 und 29 durch einen Vorsprung 43 beziehungsweise 45 voneinander getrennt sind, dabei trennt der Vorsprung 43 die Spannut 27 von der Spannut 22, entsprechend trennt der Vorsprung 45 die Spannut 29 von der Spannut 21. Das heißt, die von den Schneiden 17 und 19 abgetragenen Späne laufen in den den Schneiden zugeordneten Spannuten 21 und 22 der Bohrerspitze 7. Die von den Schneiden 23 und 25 der Aufbohrstufe 11 abgetragenen Späne laufen in den zugehörigen Spannuten 27 und 29 und mischen sich nicht mit den Spänen der der Bohrerspitze 7 zugeordneten Spannuten 21 und 22.

Der Stufenbohrer 1 kann mit Kühl-/Schmiermittelkanälen 47 und 49 versehen sein, die hier auf einer gestrichelt dargestellten senkrechten Durchmesserlinie angeordnet sein können. Die Versorgung eines Bohrers, auch Stufenbohrers 1 der hier angesprochenen Art mit einem Kühl-/Schmiermittel ist bekannt, sodass hier nicht näher darauf eingegangen wird. Es sei nur darauf hingewiesen, dass die Kühlkanäle 7 und 49 vorzugsweise im Bereich der Spitze 9 am distalen Ende 3 des Stufenbohrers 1 münden, sodass dort Austrittsöffnungen für das Kühl-/Schmiermittel realisiert werden.

In Figur 3 sind außerdem die Stollen 31 und 33 zu sehen.

Durch einen ersten um die Mittelachse 15 verlaufenden Kreis 51 wird der den Spannuten 27 und 29 der Aufbohrstufe 11 zugeordnete Kern angedeutet. Durch einen weiteren um die Mittelachse 15 verlaufenden Kreis 53 wird der den Spannuten 21 und 22 der Bohrerspitze 7 zugeordnete Kern gekennzeichnet. Deutlich erkennbar ist, dass der durch den Kreis 53 gekennzeichnete Kern der Bohrerspitze kleiner ist als der durch den Kreis 51 gekennzeichnete Kern der Aufbohrstufe 11. Beispielhaft ist hier der Durchmesser des Kreises 51 dreimal so groß wie der des Kreises 53.

Die genauen Größenverhältnisse sind letztlich nicht entscheidend. Wesentlich ist, dass der durch den Kreis 51 gekennzeichnete Kern wesentlich dicker ist als der durch den Kreis 53 gekennzeichnete Kern.

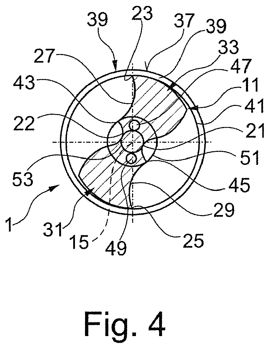

Figur 4 zeigt den Stufenbohrer 1 wiederum im Querschnitt, wobei die Schnittebene hier entlang der in Figur 2 wiedergegebenen Linie IV-IV verläuft. Gleiche und funktionsgleiche Elemente sind mit gleichen Bezugszeichen versehen, sodass insofern auf die vorangegangene Beschreibung verwiesen wird.

In der Schnittdarstellung gemäß Figur 4 ist zu erkennen, dass der Vorsprung 43 zwischen der Spannut 27 und der Spannut 22 kleiner ist als in Figur 3. Er ist überdies im Uhrzeigersinn auf dem Kreis 51 gewandert. Entsprechend ist der Vorsprung 45 zwischen der Spannut 29 und der Spannut 21 ebenfalls kleiner geworden und auf der Kreislinie 51 im Uhrzeigersinn gewandert. Entscheidend ist, dass die Trennung zwischen den Spannuten 27 und 22 und den Spannuten 29 und 21 nicht mehr so dezidiert ausgebildet ist. Es kann folglich eine erste Mischung der in den Spannuten 27 und 22 beziehungsweise 29 und 21 abgeführten Späne erfolgen.

Es ist auch zu sehen, dass der den Spannnuten 27 und 29 der Aufbohrstufe 11 zugeordnete, durch den Kreis 51 angedeutete Kern kleiner geworden ist, während der durch den Kreis 53 angedeutete, den Spannuten 21 und 22 der Bohrspritze 7 zugeordnete Kern größer geworden ist.

Darüber hinaus zeigt sich, dass die Breite der Stollen 31 und 33 gegenüber der Schnittdarstellung von Figur 3 größer geworden ist.

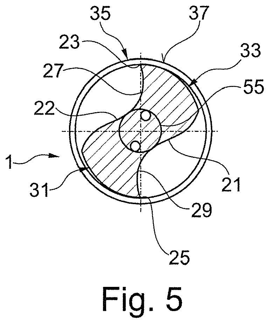

Figur 5 zeigt einen Querschnitt durch den Stufenbohrer 1 entlang der in Figur 2 wiedergegebenen Linie V-V. Gleiche und funktionsgleiche Elemente sind mit gleichen Bezugszeichen versehen, sodass insofern auf die vorangegangene Beschreibung verwiesen wird.

Es wird deutlich, dass in einem Bereich, der in einem größeren Abstand zur Stirnseite 13 der Aufbohrstufe 11 liegt, als die Bereiche, in denen die Schnittlinien III-III und IV-IV liegen, die in den Figuren 3 und 4 noch erkennbaren Vorsprünge 43 und 45 im Bereich des Querschnitts nach Figur 5 gänzlich verschwunden sind. Die Spannuten 27 und 22 beziehungsweise 29 und 21 bilden hier daher eine einzige Spannut, weil sie nicht mehr durch die Vorsprünge 43 und 45 getrennt sind, sondern ineinander zusammenlaufen.

Figur 5 zeigt überdies, dass die beiden in den Figuren 4 und 4 dargestellten Kreise 51 und 53 sich zu einem Kreis 55 vereint haben. Das liegt daran, dass, wie die vorangegangenen Schnittdarstellungen gemäß den Figuren 3 und 4 zeigen, der Durchmesser des durch den Kreis 51 gekennzeichneten Kerns der Aufbaustufe 11 ausgehend von der Stirnseite 13 sich nach links, also in Richtung auf das proximale Ende 5 des Stufenbohrers 1 verjüngt hat, während der Durchmesser des Kerns der Bohrerspitze 7 von rechts nach links, also von der Stirnseite 13 der Aufbohrstufe 11 in Richtung auf dass proximale Ende 5 größer geworden ist. Im Bereich des in Figur 5 wiedergegebenen Schnittes ist vorgesehen, dass sich die Kerndurchmesser angenähert haben, vorzugsweise gleich groß ausgebildet sind.

Aus Figur 5 wird ebenfalls deutlich, dass die Breite der Stollen 31 und 33 weiter zugenommen hat.

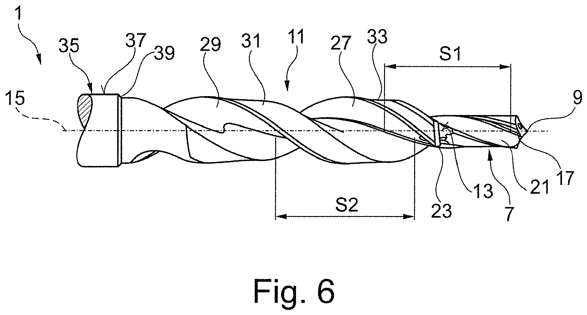

Figur 6 zeigt vergrößert den vorderen Bereich des Stufenbohrers 1 in einer Position, wie er in Figur 2 wiedergegeben ist. Der Schaft 35 ist hier abgebrochen wiedergegeben. Gleiche und funktionsgleiche Elemente sind mit gleichen Bezugszeichen versehen, sodass insofern auf die vorangegangene Beschreibung verwiesen wird.

In Figur 6 ist durch eine Hilfslinie S1 die halbe Drall-Steigung der der Bohrerspitze 7 zugeordneten Spannut 21 angedeutet. Durch eine zweite Hilfslinie S2 ist die halbe Drall-Steigung der der Aufbohrstufe 11 zugeordneten Spannut 27 angedeutet.

Die den Schneiden 21 und 23 zugeordneten Spannuten 21 und 22 weisen dieselbe Drall-Steigung auf. Entsprechend ist die den Spannuten 27 und 29 der Schneiden 23 und 25 zugeordnete Drall-Steigung identisch.

Es zeigt sich, dass die Drall-Steigung der der Aufbohrstufe 11 zugeordneten Spannuten 27 und 29 größer ist als die Drall-Steigung der der Bohrerspitze 7 zugeordneten Spannuten 21 und 22. Diese Ausgestaltung ist so gewählt, um ein Zusammenlaufen der Spannuten 27 und 22 beziehungsweise 29 und 21 zu realisieren, was aus den Schnittdarstellungen gemäß den Figuren 3 bis 5 ersichtlich ist.

Aus den Erläuterungen wird deutlich, dass der erfindungsgemäße Stufenbohrer als Mehrfasen-Stufenbohrer ausgebildet ist und zwei der Bohrerspitze 7 zugeordnete Spannuten 21 und 22, außerdem zwei davon getrennte Spannuten 27 und 29 aufweist, die der Aufbohrstufe 11 zugeordnet sind. Grundsätzlich hat sich gezeigt, dass ein Stufenbohrer mit vier Spannuten derartig geschwächt ist, dass unter Umständen ein Bruch eintreten kann. Aus den Erläuterungen wird aber deutlich, insbesondere aus den Schnittdarstellungen gemäß den Figuren 3 bis 5, dass die Durchmesser der den Spannuten 21 und 22 der Bohrerspitze 7 zugeordnete Kern einen Kerndurchmesser aufweist, der im Bereich der Stirnseite 13 der Aufbohrstufe 11 in Richtung auf das proximale Ende 5 des Stufenbohrers 1 zunimmt. Gleichzeitig nimmt der Kerndurchmesser des den Spannuten 27 und 29 der Aufbohrstufe 11 zugeordneten Kerns in diesem Bereich ab. Gleichzeitig nimmt die Breite der Stollen 31 und 33 ausgehend von der Stirnseite 13 der Aufbohrstufe 11 in Richtung auf das distale Ende 5 des Stufenbohrers 1 zu. Dadurch wird erreicht, dass die Spanräume der Bohrerspitze 7 und die der Aufbohrstufe 11 zusammenlaufen und insgesamt einen geringeren Raumbedarf aufweisen, als bei bekannten Mehrfasen-Stufenbohrern. Durch die zunehmende Breite der Stollen 31 und 33 nimmt überdies die Stabilität des Stufenbohrers 1 ausgehend von der Stirnseite 13 der Aufbohrstufe 11 in Richtung auf das distale Ende 5 des Stufenbohrers 1 zu.

Vergleicht man die Querschnitte gemäß den Figuren 3 bis 5, so zeigt sich, dass der geschnittene, hier schraffiert dargestellte Bereich des Stufenbohrers 1 ausgehend von der Stirnseite 13 der Aufbohrstufe 11 in Richtung des proximalen Endes 5 des Stufenbohrers 1 immer größer wird. Mit anderen Worten: Der Grundkörper des Stufenbohrers 1 wird ausgehend von der Stirnseite 13 der Aufbohrstufe 11 in Richtung auf das proximale Ende 5 des Stufenbohrers 1 immer dicker und stabiler. Dadurch wird eine erhöhte Stabilität des Stufenbohrers 1 realisiert. Dennoch wird erreicht, dass durch das Zusammenlaufen der Spannuten 27 und 22 beziehungsweise 29 und 21 der den von den Schneiden 17 und 19 der Bohrerspitze 7 und den Schneiden 23 und 25 der Aufbohrstufe 11 abgetragenen Späne zur Verfügung gestellter Raum ausreichend groß ist, dass eine problemlose Spanabfuhr - auch bei großen Bohrtiefen - gewährleistet ist.

Die Spannuten 21, 22 der Bohrerspitze 7, das heißt die Hauptnuten, und die Spannuten 27, 29 der Aufbohrstufe 11, das heißt die Zusatznuten, laufen bevorzugt in einem in Richtung der Längsachse 15 des Stufenbohrers 1 gemessenen Abstand zu der gedachten zweiten Kreislinie der Aufbohrstufe 11, mithin dem zweiten Flugkreis, zusammen, wobei der Abstand von mindestens einem Dreifachen des zweiten Radius bis höchstens einem Zehnfachen des zweiten Radius beträgt. Bevorzugt beträgt der Abstand von mindestens einem Vierfachen des zweiten Radius bis höchstens einem Achtfachen des zweiten Radius, vorzugsweise ein Sechsfaches des zweiten Radius.

## Patentansprüche

1. Stufenbohrer mit
- einem distalen Ende (3) und einem gegenüberliegenden proximalen Ende (5),
- einer Bohrerspitze (7), die am distalen Ende (3) des Stufenbohrers (1) eine Spitze (9) mit einer Anzahl geometrisch definierter Schneiden (17,19) aufweist, denen jeweils eine Spannut (21,22) zugewiesen ist, und die auf einer gedachten ersten Kreislinie um eine Längsachse (15) des Stufenbohrers (1) liegen, die einen ersten Radius aufweist,
- mindestens einer, in einem Abstand zum distalen Ende (3) angeordneten Aufbohrstufe (11), die eine Stirnseite (13) mit einer Anzahl geometrisch definierter Schneiden (23,25) aufweist, denen jeweils eine Spannut (27,29) zugeordnet ist, und die auf einer gedachten, um die Längsachse (15) des Stufenbohrers (1) verlaufenden zweiten Kreislinie mit einem zweiten Radius liegen, wobei
- der erste Radius kleiner ist als der zweite Radius, wobei
- die Spannuten (21,22) der Bohrerspitze (7) und die Spannuten (27,29) der Aufbohrstufe (11) in einem Bereich, der in einem größeren Abstand zum distalen Ende (3) als die Stirnseite (13) der Aufbohrstufe (11) angeordnet ist, ineinander zusammenlaufen und eine einzige Spannut bilden,
**dadurch gekennzeichnet, dass**
- sich der Kern der der Aufbohrstufe (11) zugeordneten Spannuten (27,29) verjüngt, wobei der Kerndurchmesser ausgehend von der Stirnseite (13) der Aufbohrstufe (11) in Richtung auf das proximale Ende (5) des Stufenbohrers (1) kleiner wird.

2. Stufenbohrer nach Anspruch 1, **dadurch gekennzeichnet, dass** die Drall-Steigung der der Aufbohrstufe (11) zugeordneten Spannuten (27,29) größer ist als die Drall-Steigung der der Bohrerspitze (7) zugeordneten Spannuten (21,22).

3. Stufenbohrer nach einem der vorhergehenden Ansprüche, **dadurch gekennzeichnet, dass** sich der Kern der der Bohrerspitze (7) zugeordneten Spannuten (21,22) in Richtung auf das proximale Ende (5) vergrößert.

4. Stufenbohrer nach Anspruch 3, **dadurch gekennzeichnet, dass** sich der Kern der der Bohrerspitze (7) zugeordneten Spannuten (21,22) in einem Bereich vergrößert, der einen größeren Abstand zum distalen Ende (3) des Stufenbohrers (1) aufweist als die Stirnseite (13) der Aufbohrstufe (11).

5. Stufenbohrer nach Anspruch 3 oder 4, **dadurch gekennzeichnet, dass** an dem dem distalen Ende (3) abgewandten Ende der Spannuten sich der Kerndurchmesser der der Bohrerspitze (7) zugeordneten Spannuten (21,22) dem Kerndurchmesser der der Aufbohrstufe (11) zugeordneten Spannuten (27,29) annähert, vorzugsweise diesem entspricht.

6. Stufenbohrer nach einem der vorhergehenden Ansprüche, **dadurch gekennzeichnet, dass** zwischen den Spannuten (27,29) der Aufbohrstufe (11) Stollen (31,33) ausgebildet werden, deren Breite ausgehend von der Stirnseite (13) der Aufbohrstufe (11) in Richtung auf das proximale Ende (5) des Stufenbohrers (1) zunimmt.

7. Stufenbohrer nach einem der vorhergehenden Ansprüche, **dadurch gekennzeichnet, dass** die Spannuten (21,22) der Bohrerspitze (7) und die Spannuten (27,29) der Aufbohrstufe (11) in einem in Richtung der Längsachse (15) des Stufenbohrers (1) gemessenen Abstand zu der gedachten zweiten Kreislinie der Aufbohrstufe (11) zusammenlaufen, der von mindestens einem Dreifachen des zweiten Radius bis höchstens einem Zehnfachen des zweiten Radius beträgt.

8. Stufenbohrer nach Anspruch 7, **dadurch gekennzeichnet, dass** der Abstand von mindestens einem Vierfachen des zweiten Radius bis höchstens einem Achtfachen des zweiten Radius, vorzugsweise mindestens ein Sechsfaches des zweiten Radius beträgt.

## Claims

1. Step drill with
- a distal end (3) and an opposite proximal end (5),
- a drill tip (7) that has a tip (9) at the distal end (3) of the step drill (1) and comprises a number of geometrically defined cutters (17, 19), each of which is paired with a flute (21, 22) and lies on an imaginary first circular line about a longitudinal axis (15) of the step drill (1), said circular line having a first radius,
- at least one drill step (11) that is arranged at a distance from the distal end (3) and has an end face (13) with a number of geometrically defined cutters (23, 25), each of which is paired with a flute (27, 29) and lies on an imaginary second circular line that runs about the longitudinal axis (15) of the step drill (1), said circular line having a second radius, wherein
- the first radius is smaller than the second radius, wherein
- the flutes (21, 22) of the drill tip (7) and the flutes (27, 29) of the drill step (11) merge in a region, which is arranged at a greater distance from the distal end (3) than the end face (13) of the drill step (11), and form a single flute,
**characterized in that**
- the core of the flutes (27, 29) associated with the drill step (11) tapers, wherein the core diameter, proceeding from the end face (13) of the drill step (11) in the direction of the proximal end (5) of the step drill (1), becomes smaller.

2. Step drill according to claim 1, **characterized in that** the spin incline of the flutes (27, 29) associated with the drill step (11) is greater than the spin incline of the flutes (21, 22) associated with the drill tip (7).

3. Step drill according to one of the previous claims, **characterized in that** the core of the flutes (21, 22) associated with the drill tip (7) increases in the direction of the proximal end (5).

4. Step drill according to claim 3, **characterized in that** the core of the flutes (21, 22) associated with the drill tip (7) increases in an area which has a greater distance to the distal end (3) of the step drill (1) than the end face (13) of the drill step (11).

5. Step drill according to claim 3 or 4, **characterized in that**, at the end of the flutes which faces away from the distal end (3), the core diameter of the flutes (21, 22) associated with the drill tip (7) approximates, preferably corresponds to, the core diameter of the flutes (27, 29) associated with the drill step (11).

6. Step drill according to one of the previous claims, **characterized in that**, between the flutes (27, 29) of the drill step (11), tunnels (31, 33) are formed, the width of which, proceeding from the end face (13) of the drill step (11) in the direction of the proximal end (5) of the step drill (1), increases.

7. Step drill according to one of the previous claims, **characterized in that** the flutes (21, 22) of the drill tip (7) and the flutes (27, 29) of the drill step (11) merge at a distance, measured in the direction of the longitudinal axis (15) of the step drill (1), from the imaginary second circular line of the drill step (11), which is at least three times the second radius and up to at most ten times the second radius.

8. Step drill according to claim 7, **characterized in that** the distance is at least four times the second radius and up to at most eight times the second radius, preferably six times the second radius.

## Revendications

1. Foret étagé avec
- une extrémité distale (3) et une extrémité proximale opposée (5),
- une pointe de foret (7) qui présente à l'extrémité distale (3) du foret étagé (1) une pointe (9) avec un certain nombre de tranchants (17, 19) définis géométriquement auxquels est à chaque fois assignée une rainure à copeaux (21, 22), et qui se situent sur une première ligne de cercle imaginaire autour d'un axe longitudinal (15) du foret étagé (1) qui présente un premier rayon,
- au moins un étage d'alésage (11) disposé à un écart de l'extrémité distale (3) qui présente un côté frontal (13) avec un certain nombre de tranchants (23, 25) définis géométriquement auxquels est à chaque fois attribuée une rainure à copeaux (27, 29), et qui se situent sur une seconde ligne de cercle imaginaire, s'étendant autour de l'axe longitudinal (15) du foret étagé (1) avec un second rayon, dans lequel
- le premier rayon est inférieur au second rayon, dans lequel
- les rainures à copeaux (21, 22) de la pointe de foret (7) et les rainures à copeaux (27, 29) de l'étage d'alésage (11) convergent l'une dans l'autre dans une région qui est disposée à un écart supérieur de l'extrémité distale (3) au côté frontal (13) de l'étage d'alésage (11) et forment une seule rainure à copeaux,
**caractérisé en ce que**
- le noyau des rainures à copeaux (27, 29) attribuées à l'étage d'alésage (11) se rétrécit, dans lequel le diamètre de noyau devient plus petit en partant du côté frontal (13) de l'étage d'alésage (11) en direction de l'extrémité proximale (5) du foret étagé (1).

2. Foret étagé selon la revendication 1, **caractérisé en ce que** le pas de torsion des rainures à copeaux (27, 29) attribuées à l'étage d'alésage (11) est supérieur au pas de torsion des rainures à copeaux (21, 22) attribuées à la pointe de foret (7).

3. Foret étagé selon une des revendications précédentes, **caractérisé en ce que** le noyau des rainures à copeaux (21, 22) attribuées à la pointe de foret (7) s'agrandit en direction de l'extrémité proximale (5).

4. Foret étagé selon la revendication 3, **caractérisé en ce que** le noyau des rainures à copeaux (21, 22) attribuées à la pointe de foret (7) s'agrandit dans une région qui présente un écart supérieur de l'extrémité distale (3) du foret étagé (1) au côté frontal (13) de l'étage d'alésage (11).

5. Foret étagé selon la revendication 3 ou 4, **caractérisé en ce que** à l'extrémité des rainures à copeaux détournée de l'extrémité distale (3) le diamètre de noyau des rainures à copeaux (21, 22) attribuées à la pointe de foret (7) approxime le diamètre de noyau des rainures à copeaux (27, 29) attribuées à l'étage d'alésage (11), de préférence correspond à celui-ci.

6. Foret étagé selon une des revendications précédentes, **caractérisé en ce que** des cannelures (31, 33) sont réalisées entre les rainures à copeaux (27, 29) de l'étage d'alésage (11) dont la largeur croît en partant du côté frontal (13) de l'étage d'alésage (11) en direction de l'extrémité proximale (5) du foret étagé (1).

7. Foret étagé selon une des revendications précédentes, **caractérisé en ce que** les rainures à copeaux (21, 22) de la pointe de foret (7) et les rainures à copeaux (27, 29) de l'étage d'alésage (11) convergent vers la seconde ligne de cercle imaginaire de l'étage d'alésage (11) à un écart mesuré en direction de l'axe longitudinal (15) du foret étagé (1) qui est d'au moins le triple du second rayon à au plus le décuple du second rayon.

8. Foret étagé selon la revendication 7, **caractérisé en ce que** l'écart est d'au moins le quadruple du second rayon à au plus l'octuple du second rayon, de préférence d'au moins le sextuple du second rayon.
